# EUROPÄISCHE PATENTSCHRIFT

(11) **EP 1 310 734 B1**
(45) Veröffentlichungstag und Bekanntmachung des Hinweises auf die Patenterteilung: **22.08.2007**
(21) Anmeldenummer: 02025138.5
(22) Anmeldetag: 09.11.2002
(51) Int. Cl.: F23L 7/00, F23G 7/05

(54) **Verfahren zur Leistungssteigerung bei der exothermen Verbrennung von Abfallstoff**
Method for increasing the efficiency of exothermal combustion of waste materials
Méthode pour augmenter l'efficacité de la combustion exothermique de déchets

(30) Priorität: 13.11.2001 DE 10155811
(43) Veröffentlichungstag der Anmeldung: 14.05.2003
(73) Patentinhaber: Air Liquide Deutschland GmbH, 40235 Düsseldorf (DE); Messer Group GmbH, 65843 Sulzbach (DE)
(72) Erfinder: Gross, Gerhard, 47877 Willich (DE); Lailach, Günter, 14467 Potsdam (DE)
(74) Vertreter: Kahlhöfer, Hermann

(56) Entgegenhaltungen:
- EP-A- 1 030 150
- EP-A- 1 205 435
- WO-A-98/53908
- DE-A- 19 722 382
- DE-A- 19 722 570
- GB-A- 1 443 878

## Beschreibung

Die Erfindung betrifft ein Verfahren zur Leistungssteigerung bei der Verbrennung von brennbarem Abfallstoff in einer Brennkammer, indem der Abfallstoff einer Brennerflamme zugeführt und darin mit Verbrennungsluft bei einer Temperatur im Bereich zwischen 1100°C und 1700°C verbrannt wird.

Abfallstoffe, die keiner Wiederverwendung zugeführt werden können, müssen ggf. durch Verbrennung entsorgt werden. Dabei müssen Temperaturen im Bereich 1100 bis 1700°C eingehalten werden, um eine vollständige Verbrennung sicherzustellen. Dies gilt insbesondere für halogenhaltige Abfälle wie PCB-haltige Altöle oder Halogenkohlenwasserstoffe. Die Kosten der dafür benötigten Verbrennungsanlagen sind insbesondere durch die aufwendigen Apparate zur Reaktionsgaskühlung und -reinigung sehr hoch. Deshalb ist es ein Bestreben, die spezifischen Kosten in bestehenden Anlagen durch Kapazitätserhöhung zu verringern. Dabei ist der Reaktionsgasvolumenstrom zumeist die begrenzende Größe.

Verschiedene Verbrennungsprozesse sind aus EP 1 030 150 A1 und WO 98/53908 A2 bekannt.

Für endotherme Prozesse wie die thermische Spaltung von Metallsulfaten oder Abfallschwefelsäure, bei denen die Reaktionswärme durch Verbrennung von zusätzlich eingebrachten Brennstoffen aufgebracht werden muss, sind Verfahren bekannt, die Kapazität der Anlagen dadurch zu erhöhen, dass Luftsauerstoff zumindest teilweise durch reinen Sauerstoff ersetzt wird. Ein derartiges Verfahren ist in der DE 197 22 570 (A1) beschrieben.

Bei exothermen Verbrennungsprozessen ist diese Möglichkeit jedoch dadurch eingeschränkt, dass die Verringerung des Stickstoffgehaltes in den Verbrennungsgasen unmittelbar zu einer Temperaturerhöhung führt, für die die Verbrennungsanlagen im Normalfall nicht ausgelegt sind.

Aufgabe der Erfindung ist deshalb, ein Verfahren zur Verfügung zu stellen, das eine Kapazitätserhöhung von Anlagen zur exothermen Verbrennung von Abfallstoffen erlaubt.

Diese Aufgabe wird, ausgehend von dem eingangs genannten Verfahren, erfindungsgemäß dadurch gelöst, dass mindestens ein Teil der Verbrennungsluft durch ein sauerstoffreiches Gas mit einem gegenüber Luft erhöhten Sauerstoffgehalt bereitgestellt wird, und dass das sauerstoffreiche Gas mit einem Kühlmedium vermischt wird.

Das erfindungsgemäße Verfahren hat zwei wesentliche Aspekte.
➢ Zum einen wird eine Kapazitätserhöhung der Verbrennungsanlage erreicht, indem ein sauerstoffreiches Gas mit einem gegenüber Luft erhöhten Sauerstoffgehalt bereitgestellt wird, das die Verbrennungsluft vollständig oder zum Teil ersetzt, durch. Die damit einhergehende Kapazitätserhöhung - gegenüber den bekannten Verfahren, bei denen nur Luft als Oxidationsmittel eingesetzt wird - beruht im Wesentlichen darauf, dass der als Ballast entfallende Stickstoffanteil der Verbrennungsluft durch zusätzliche Reaktionsgase (Sauerstoff, verdampfendes Kühlmittel) ersetzt wird.
➢ Die mit dieser Verfahrensweise einhergehende Temperaturerhöhung wird ganz oder teilweise kompensiert, indem das sauerstoffreiche Gas mit einem Kühlmedium vermischt wird. Das Kühlmedium ist eine Flüssigkeit. Gemäß der Erfindung wird die gesamte Menge des Kühlmediums oder ein Teil davon mit dem sauerstoffreichen Gas vermischt. Durch die Vermischung des sauerstoffreichen Gases mit dem Kühlmedium werden relativ kalte und sehr heiße Bereiche in der Brennerflamme vermieden, die einerseits zu unvollständiger Verbrennung, oder andererseits zur Schädigung der Brennkammerauskleidung führen würden. Durch die Verdampfung des flüssigen Kühlmediums wird der Reaktion zusätzliche Energie entzogen.

Das erfindungsgemäße Verfahren ermöglicht daher auch eine Kapazitätserhöhung bei einer bestehenden Verbrennungsanlage, ohne dass eine aufwendige Nachrüstung der Anlage - etwa durch eine besonders temperaturstabile Brennkammerauskleidung erforderlich ist.

Unter einem sauerstoffhaltigen Gas im Sinne der Erfindung wird reiner Sauerstoff oder mit Sauerstoff angereichertes Gas mit einem Sauerstoffanteil von mehr als 21 Vol.-% verstanden.

Das Vermischen von sauerstoffhaltigem Gas und Kühlmedium erfolgt vor der Brennerflamme oder in der Brennerflamme. Bevorzugt wird jedoch das sauerstoffreiche Gas vor der Brennerflamme mit dem Kühlmedium vermischt. Dadurch ist die Erzeugung einer homogenen Mischung erleichtert, so dass Temperaturunterschiede in der Brennerflamme weitgehend vermieden werden.

Besonders geeignete Kühlmedien im Sinne der Erfindung sind Wasser oder wässrige Lösungen. Durch die hohe Verdampfungswärme von Wasser wird der Verbrennungsreaktion Energie entzogen. Erfindungsgemäß wird mindestens ein Teil des gesamten Kühlmediums (Wasser oder die wässrige Lösung) dem sauerstoffreichen Gas zugemischt. Ein Teil des Kühlmittels kann auch dem Abfallstoff direkt zugemischt werden, wohingegen eine Zumischung der gesamten Menge an Kühlmittel zum Abfallstoff problematisch ist, insbesondere wenn dieser - was häufig der Fall ist - nicht mit Wasser homogen mischbar ist. Denn infolge inhomogener Mischungen kann es in diesen Fällen zu unvollständiger Verbrennung oder zur Schädigung der Brennkammerauskleidung kommen.

Durch die Erfindung wird eine Kapazitätserhöhung um bis zu 50% ermöglicht, ohne dass durch Temperaturspitzen in der Brennerflamme Risiken für die Ofenausmauerung oder durch unvollständige Verbrennung der Abfälle Abwasser- oder Abluftprobleme entstehen.

Vorzugsweise wird bei der Verbrennung chlorhaltiger Abfallstoffe als Kühlmedium Salzsäure eingesetzt. Dabei kann es sich auch um verunreinigte Salzsäure handeln. Der Einsatz von Salzsäure als Kühlmittel bietet sich bei chlorhaltigen Abfallstoffen wegen den in dem Fall ohnehin vorhandenen Entsorgungseinrichtungen für Chlor an.

Es hat sich außerdem auch ein Einsatz von mit organischen Verbindungen verunreinigtem Wasser als Kühlmittel bewährt.

Bei der Verbrennung flüssiger oder gasförmiger Abfallstoffe werden diese durch Düsen oder Brenner in die Brennkammer eingetragen. Dabei können diese Abfallstoffe für einen Teil des Kühlmediums als Trägermedium dienen. Im übrigen wird das Kühlmedium vorzugsweise mittels mindestens einer Zerstäuberdüse in die Brennerflamme eingedüst.

Die Zerstäubung des Kühlmediums erfolgt vorzugsweise in Pneumatikzerstäuberdüsen, wobei das sauerstoffreiche Gas als Zerstäubergas eingesetzt wird.

Es ist aber im Sinne der Erfindung auch vorteilhaft, als Zerstäuberdüse eine einen Tropfenstrom erzeugende Düse in Form mindestens einer Vollkegeldüse oder mindestens einer Flachstrahldüse einzusetzen, und das sauerstoffreiche Gas in den Tropfenstrom einzuleiten. Das sauerstoffreiche Gas wird dabei bevorzugt durch einen Ringspalt geleitet, der die Vollkegeldüse bzw. die Flachstrahldüse umgibt: Die Anordnung der Zerstäuberdüse bzw. der Zerstäuberdüsen erfolgt dabei vorteilhafterweise so, dass der mit dem sauerstoffreichen Gas angereicherte Tropfenstrom die Brennerflamme trifft.

Eine besonders innige Vermischung von sauerstoffreichem Gas und Kühlmedium wird bei einer Verfahrensvariante des erfindungsgemäßen Verfahrens erreicht, bei der mehrere jeweils ein Anströmrohr aufweisende Zerstäuberdüsen um eine ein Anströmrohr aufweisende zentrale Brennstoffdüse verteilt sind.

Hierbei ist eine weitere Verbesserung zu erreichen, indem die Anströmrohre der Zerstäuberdüsen mit dem Anströmrohr der Brennstoffdüse einen Winkel größer> 0 °, vorzugsweise im Bereich von 20 ° bis 90 ° einschließen. Durch den Winkel ergibt sich eine Fokussierung auf den Bereich der Brennerflamme und damit einer intensivere Mischung als bei parallel verlaufenen Düsen. Diese fokussierende Anordnung von Anströmrohr und Brennstoffdüse ist im übrigen auch bei Einsatz von nur einer Zerstäuberdüse bevorzugt.

Bei einer Verfahrensweise, bei der Verbrennungsluft zur Erzeugung von Turbulenz tangential in die Brennkammer eingeleitet wird, wird bevorzugt auch das sauerstoffreiche Gas tangential in die Brennkammer geleitet. Hierzu wird die Zerstäuberdüse bzw. es werden die Zerstäuberdüsen vorteilhaft nicht radial, sondern so ausgerichtet, dass sie die durch den tangentialen Verbrennungsluftstrom erzeugte Turbulenz verstärken. Hierzu schließen die Anströmrohre der Zerstäuberdüsen mit den Radien der Luftanströmkammer einen Winkel im Bereich von 5 ° bis 45 ° ein. Dabei können die Zerstäuberdüse bzw. die Zerstäuberdüsen zusätzlich auch gegenüber der Brennerkammer-Mittelachse verkippt sind.

Es ist möglich, Kühlmedium und sauerstoffreiches Gas mittels einer Zerstäuberdüse einzuleiten. Vorteilhafter ist aber das Einleiten durch mehrere Zerstäuberdüsen, von denen je nach geforderter Kapazitätserhöhung nur ein Teil oder alle unter optimalen Bedingungen betrieben werden,

Es ist im Sinne der Erfindung auch möglich, einen Teil des zwecks Kapazitätserhöhung zuzuführenden Sauerstoffs mit Verbrennungsluft direkt zu mischen. Darüber hinaus ist es möglich, einen Teil des Kühlmediums mit den brennbaren Abfällen einzuspeisen, wobei in dem Fall, dass die Flüssigkeiten nicht mischbar sind, diese vorteilhaft als Emulsion in den Ofen eingespeist werden.

Die Erfindung umfasst außer der Kapazitätserhöhung bei der Verbrennung flüssiger oder gasförmiger Abfallstoffe auch die Kapazitätserhöhung bei der Verbrennung fester Abfallstoffe. Letztere erfolgt im Allgemeinen in Drehrohröfen. In diesem Fall wird der in Zerstäuberdüsen erzeugte Tropfenstrom des Kühlmediums, gemischt mit dem sauerstoffreichen Gas, im Bereich des Eintrags des Abfalls in den Ofen auf das brennende Material geblasen.

Anhand eines - wegen der hohen Verbrennungstemperatur und kurzen Verweilzeit schwierigen Anwendungsfalles - sollen die Vorteile der Erfindung dargestellt werden, ohne dass dadurch der Umfang der Erfindung eingeschränkt wird.

### Beispiel

Es wird von folgendem Stand der Technik ausgegangen:
In einen trommelförmigen Ofen mit 2,2 m Durchmesser und 4,5 m Länge wurden durch eine Düse gemeinsam 2750 kg/h Chlorkohlenwasserstoffe mit einem CI-Gehalt von 73 Gew-% und 200 kg/h Wasser eingetragen. Über eine Anströmkammer wurden 9000 m³/h (i.N.) Verbrennungsluft so in den Ofen eingeblasen, dass sie die Düse tangential umströmten. Bei der Verbrennungsreaktion wurden 10500 m³/h (i.N.) Reaktionsgase mit einer Temperatur von 1570°C erzeugt. Diese enthielten 12 Vol-% HCI, 9,3 Vol-% H₂O, 11,3 Vol-% CO₂, 2,9 Vol-% O₂ und 64,5 Vol-% N₂. Nach einer Verweilzeit von ca. 1 s im Ofen wurden die Gase in einer Quenche abgeschreckt und in die HCI-Kondensationsanlage geleitet.

Die limitierende Größe für die Anlagenkapazität ist die erforderliche Reaktionszeit bei 1500 bis 1600°C und damit der Reaktionsgasvolumenstrom.

Zum Zweck einer Kapazitätserhöhung dieser Anlage wurden in die Luftanströmkammer 6 Stutzen eingeschweißt, durch die 6 Pneumatikzerstäuberdüsen so in die Anströmkammer ragten, dass die Düsen 6 cm hinter der zentralen Brennstoffdüse einen Kranz um diese bildeten. Die Anströmrohre der Brennerdüse und der Zerstäuberdüsen schlossen einen Winkel von 60 ° ein. Gegen den Radius bildeten die Anströmrohre einen Winkel von 20 ° in der Richtung, in der die tangentiale Einleitung der Verbrennungsluft erfolgte.

Die Abfallverbrennung wurde zu Beginn des Versuchs in der oben beschriebenen Weise betrieben. Bei stationärem Betrieb mit 1570°C Verbrennungstemperatur wurden die Pneumatikzerstäuberdüsen nacheinander in Betrieb genommen und die Einspeisung von Abfall und Verbrennungsluft stufenweise angepasst. Im Sollzustand mit erhöhter Kapazität ergab sich folgende Einstellung der Betriebsparameter:

Es wurden 3300 kg/h Abfall durch die Brennstoffdüse eingespeist. Die Verbrennungsluftzufuhr war von 9000 m³/h auf 5400 m³/h (i.N.) reduziert worden. Mit den 6 Zerstäuberdüsen wurden insgesamt 1730 I/h Wasser mittels 1000 m³/h (i.N.) Sauerstoff in die Flamme eingedüst. Die Temperatur der Verbrennungsgase konnte im Bereich von 1550 bis 1580°C gehalten werden. Der Reaktionsgasvolumenstrom blieb konstant bei 10500 m³/h (i.N.). Das Reaktionsgas enthielt 14,4 Vol-% HCI, 28,8 Vol-% H₂O, 13,6 Vol-% CO₂, 2,9 Vol-% O₂ und 40,2 Vol-% N₂. Die Analyse der kondensierten Salzsäure belegte die vollständige Verbrennung des Abfalls.

Die Kapazität der Verbrennungsanlage wurde durch O₂-Einsatz um 20 % erhöht bei gleichzeitiger Reduzierung des Abgasvolumens um 28 %.

## Patentansprüche

1. Verfahren zur Leistungssteigerung bei der Verbrennung von brennbarem Abfallstoff in einer Brennkammer, indem der Abfallstoff einer Brennerflamme zugeführt und darin mit Verbrennungsluft bei einer Temperatur im Bereich zwischen 1100°C und 1700°C verbrannt wird, wobei mindestens ein Teil der Verbrennungsluft durch ein sauerstoffreiches Gas mit einem gegenüber Luft erhöhten Sauerstoffgehalt ersetzt wird, **dadurch gekennzeichnet dass** das sauerstoffreiche Gas mit einem flüssigen Kühlmedium vermischt wird.

2. Verfahren nach Anspruch 1, **dadurch gekennzeichnet, dass** das sauerstoffreiche Gas vor der Brennerflamme mit dem Kühlmedium vermischt wird.

3. Verfahren nach Anspruch 1 oder 2, **dadurch gekennzeichnet, dass** als Kühlmedium Wasser oder eine wässrige Lösung eingesetzt wird.. '

4. Verfahren nach Anspruch 3, **dadurch gekennzeichnet, dass** als Kühlmedium Salzsäure eingesetzt wird.

5. Verfahren nach Anspruch 3, **dadurch gekennzeichnet, dass** als wässrige Lösung mit organischen Verbindungen verunreinigtes Wasser eingesetzt wird.

6. Verfahren nach einem der Ansprüche 1 bis 5, **dadurch gekennzeichnet, dass** das Kühlmedium mittels mindestens einer Zerstäuberdüse in die Brennerflamme eingedüst wird.

7. Verfahren nach Anspruch 6, **dadurch gekennzeichnet, dass** als Zerstäuberdüse eine Pneumatikzerstäuberdüse eingesetzt, und das sauerstoffreiche Gas als Zerstäubergas eingesetzt wird.

8. Verfahren nach Anspruch 6, **dadurch gekennzeichnet, dass** als Zerstäuberdüse eine einen Tropfenstrom erzeugende Düse in Form einer Vollkegeldüse oder einer Flachstrahldüse eingesetzt, und das sauerstoffreiche Gas in den Tropfenstrom eingeleitet wird.

9. Verfahren nach einem der Ansprüche 1 bis 8, **dadurch gekennzeichnet, dass** mehrere jeweils ein Anströmrohr aufweisende Zerstäuberdüsen um eine ein Anströmrohr aufweisende zentrale Brennstoffdüse verteilt sind.

10. Verfahren nach Anspruch 9, **dadurch gekennzeichnet, dass** die Anströmrohre der Zerstäuberdüsen mit dem Anströmrohr der Brennstoffdüse einen Winkel größer 0 °, vorzugsweise im Bereich von 20 ° bis 90 ° einschließen.

11. Verfahren nach Anspruch 9 oder 10, **dadurch gekennzeichnet, dass** die Anströmrohre der Zerstäuberdüsen mit den Radien der Luftanströmkammer einen Winkel im Bereich von 5 ° bis 45 ° einschließen

12. Verfahren nach einem der vorhergehenden Ansprüche, **dadurch gekennzeichnet, dass** das sauerstoffreiche Gas mit der Verbrennungsluft gemischt wird.

13. Verfahren nach einem der vorhergehenden Ansprüche, **dadurch gekennzeichnet, dass** ein Teil des Kühlmediums mit dem Abfallstoff gemischt wird.

## Claims

1. Method for power increase during combustion of combustible waste substance in a combustion chamber, by the waste substance being fed to a burner flame and being combusted therein with combustion air at a temperature in the region of between 1100°C and 1700°C, wherein at least some of the combustion air is substituted by an oxygen-rich gas with an increased oxygen content compared with air, **characterized in that** the oxygen-rich gas is mixed with a liquid cooling medium.

2. Method according to Claim 1, **characterized in that** the oxygen-rich gas is mixed with the cooling medium upstream of the burner flame.

3. Method according to Claim 1 or 2, **characterized in that** water or an aqueous solution is used as cooling medium.

4. Method according to Claim 3, **characterized in that** hydrochloric acid is used as cooling medium.

5. Method according to Claim 3, **characterized in that** water which is contaminated by organic compounds is used as an aqueous solution.

6. Method according to one of Claims 1 to 5, **characterized in that** the cooling medium is injected into the burner flame by means of at least one atomizing nozzle.

7. Method according to Claim 6, **characterized in that** a pneumatic atomizing nozzle is used as an atomizing nozzle, and the oxygen-rich gas is used as an atomizing gas.

8. Method according to Claim 6, **characterized in that** a nozzle in the form of a solid cone nozzle or a flat jet nozzle, which produces a droplet stream, is used as an atomizing nozzle, and the oxygen-rich gas is directed into the droplet stream.

9. Method according to one of Claims 1 to 8, **characterized in that** a plurality of atomizing nozzles, which have a flow pipe in each case, are distributed around a central fuel nozzle which has a flow pipe.

10. Method according to Claim 9, **characterized in that** the flow pipes of the atomizing nozzles with the flow pipe of the fuel nozzle include an angle which is greater than 0°, preferably in the region of 20° to 90°.

11. Method according to Claim 9 or 10, **characterized in that** the flow pipes of the atomizing nozzles with the radii of the air flow chamber include an angle in the region of 5° to 45°.

12. Method according to one of the preceding claims, **characterized in that** the oxygen-rich gas is mixed with the combustion air.

13. Method according to one of the preceding claims, **characterized in that** some of the cooling medium is mixed with the waste substance.

## Revendications

1. Procédé en vue de l'augmentation de puissance lors de la combustion d'un déchet combustible dans une chambre de combustion, en ce que le déchet est acheminé à une flamme de brûleur et y est brûlé à l' aide d'air de combustion à une température dans le domaine compris entre 1100°C et 1700°C, au moins une partie de l'air de combustion étant remplacée par un gaz enrichi en oxygène ayant une teneur en oxygène plus élevée par rapport à l'air, **caractérisé en ce que** le gaz enrichi en oxygène est mélangé à un milieu de refroidissement fluide.

2. Procédé selon la revendication 1, **caractérisé en ce que** le gaz enrichi en oxygène est mélangé avant la flamme de brûleur avec le milieu de refroidissement.

3. Procédé selon la revendication 1 ou 2, **caractérisé en ce que** l'on utilise, en tant que milieu de refroidissement, l'eau ou une solution aqueuse.

4. Procédé selon la revendication 3, **caractérisé en ce que** l'on utilise, en tant que milieu de refroidissement, l'acide chlorhydrique.

5. Procédé selon la revendication 3, **caractérisé en ce que** l'on utilise, en tant que solution aqueuse, de l'eau contaminée par des composés organiques.

6. Procédé selon l'une quelconque des revendications 1 à 5, **caractérisé en ce que** le milieu de refroidissement est injecté dans la flamme du brûleur à l'aide d'au moins une buse d'atomisation.

7. Procédé selon la revendication 6, **caractérisé en ce que** l'on utilise, en tant que buse d'atomisation, une buse d'atomisation pneumatique, et **en ce que** l'on utilise le gaz enrichi en oxygène en tant que gaz d'atomisation.

8. Procédé selon la revendication 6, **caractérisé en ce que** l'on utilise, en tant que buse d'atomisation, une buse produisant un courant de gouttes sous la forme d'une buse à cône plein ou d'une buse à jet plat, et **en ce que** l'on introduit le gaz enrichi en oxygène dans le courant de gouttes.

9. Procédé selon l'une quelconque des revendications 1 à 8, **caractérisé en ce que** plusieurs buses d'atomisation présentant à chaque fois un tube d'afflux de courant sont réparties autour d'une buse de combustible centrale présentant un tube d'afflux.

10. Procédé selon la revendication 9, **caractérisé en ce que** les tubes d'afflux des buses d'atomisation renferment avec le tube d'afflux de la buse à combustible un angle supérieur à 0°, de préférence, dans le domaine de 20° à 90°.

11. Procédé selon la revendication 9 ou 10, **caractérisé en ce que** les tubes d'afflux des buses d'atomisation referment avec les rayons de la chambre d'afflux d'air un angle dans le domaine de 5° à 45°.

12. Procédé selon l'une quelconque des revendications précédentes, **caractérisé en ce que** le gaz enrichi en oxygène est mélangé à l'air de combustion.

13. Procédé selon l'une quelconque des revendications précédentes, **caractérisé en ce qu'**une partie du milieu de refroidissement est mélangé au déchet.
